(19) **Europäisches Patentamt**

**European Patent Office**

**Office européen des brevets**

(11) **EP 0 874 750 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(51) Int Cl.⁷: **B62D 6/00**, B60T 8/00, G05D 1/08

(21) Anmeldenummer: **97901584.9**

(22) Anmeldetag: **22.01.1997**

(86) Internationale Anmeldenummer:
**PCT/EP97/00287**

(87) Internationale Veröffentlichungsnummer:
**WO 97/28037 (07.08.1997 Gazette 1997/34)**

(54) **VERFAHREN ZUR BESTIMMUNG VON GRÖSSEN, DIE DAS FAHRVERHALTEN EINES FAHRZEUGS BESCHREIBEN**

METHOD OF DETERMINING VARIABLES WHICH DESCRIBE A VEHICLE'S DRIVING CHARACTERISTICS

PROCEDE PERMETTANT DE DETERMINER DES GRANDEURS DECRIVANT LA TENUE DE ROUTE D'UN VEHICULE

(84) Benannte Vertragsstaaten:
**DE FR GB**

(30) Priorität: **03.02.1996 DE 19603908**
**24.02.1996 DE 19607050**

(43) Veröffentlichungstag der Anmeldung:
**04.11.1998 Patentblatt 1998/45**

(73) Patentinhaber: **Continental Teves AG & Co. oHG 60488 Frankfurt (DE)**

(72) Erfinder:
• **GUO, Limin**
 **D-60489 Frankfurt am Main (DE)**

• **WANKE, Peter**
 **D-60437 Frankfurt am Main (DE)**

(74) Vertreter: **Blum, Klaus-Dieter, Dipl.-Ing. c/o ITT Automotive Europe GmbH, Guerickestrasse 7 60488 Frankfurt (DE)**

(56) Entgegenhaltungen:
**EP-A- 0 557 893          DE-A- 4 226 749**
**GB-A- 2 280 651**

# EP 0 874 750 B1

**Beschreibung**

Die vorliegende Erfindung betrifft ein Verfahren zur Bestimmung von Größen, die das Fahrverhalten eines vierrädrigen Fahrzeugs beschreiben, gemäß dem Oberbegriff des Anspruchs 1.

Ein solches Verfahren ist in der DE 42 26 749 A1 beschrieben. Es werden einer Recheneinrichtung Signale zugeführt, die die Längsbeschleunigung $a_x$, die Fahrzeuggeschwindigkeit in Längsrichtung $v_x$, die Querbeschleunigung $a_y$ und die Gierwinkelgeschwindigkeit $\dot{\Psi}$ repräsentieren, wobei aufgrund dieser gemessenen Größen in der Recheneinrichtung unter Verwendung eines Fahrzeugsmodells zumindest der Schwimmwinkel $\beta$ abgeleitet wird. Im Verlauf der Rechnung werden Nick- und Wankbewegungen des Fahrzeugs als vernachlässigbar klein angenommen, um die Drehgeschwindigkeiten um die Fahrzeuglängs- und - querachse gleich Null setzen zu können und somit ein komplexes Gleichungssystem zu vereinfachen. Auch die Fahrzeugquerbeschleunigung wird als die angenommen, welche von fahrzeugfesten Querbeschleunigungsmessern erfaßt wird, so daß auch seitliche Fahrbahnneigungen als Querbeschleunigungen angenommen werden. Dies führt zwangsläufig zu Fehlern bei der Berechnung des Schwimmwinkels. Deshalb kann nicht gewährleistet werden, daß die Regelung ohne Berücksichtigung der Querneigung auch bei Fahrten mit Querneigung zum gewünschten Fahrverhalten führt.

Aus der GB 2280651 A ist ein weiteres Verfahren bekannt, welches für die Bestimmung von Größen eingesetzt wird, die das Fahrverhalten eines Fahrzeugs charakterisieren. Hierzu werden die Längsbeschleunigung, die Fahrzeuggeschwindigkeit in Längsrichtung, die Querbeschleunigung und die Gierwinkelgeschwindigkeit als gemessenen Größen in der Recheneinrichtung unter Verwendung eines Fahrzeugsmodells verarbeitet und der Schwimmwinkel daraus berechnet. Zusätzlich werden weitere Meßgrößen wie der Lenkwinkel , die einzelnen Radgeschwindigkeiten und der Neigungswinkel der Straße zur Bestimmung des Fahrverhaltens eines Fahrzeugs herangezogen und in der Recheneinrichtung verarbeitet.

Um die Stabilität bzw. eine gute Qualität der Giermomentenregelung auch bei einer Fahrbahnquerneigung und/oder bei einer Wankbewegung des Fahrzeugs zu gewährleisten, ist eine Querneigungserkennung notwendig. Dies erfolgt durch eine Berechnung des Querneigungswinkels. Bei einer erkannten Querneigung kann der Regler, also die Recheneinrichtung, so ausgelegt werden, daß er gegenüber Querneigung robust arbeitet.

Der vorliegenden Erfindung liegt die Aufgabe zugrunde, ein Verfahren der eingangs genannten Art zu schaffen, welches in der Lage ist, eine Querneigung des Fahrzeugs von einer echten Querbeschleunigung des Fahrzeugs zu unterscheiden und betragsmäßig anzugeben.

Diese Aufgabe wird in Verbindung mit des kennzeichnenden Merkmalen des Anspruchs 1 gelöst. Die Berechnung des Querneigungswinkels basiert also auf einer Koordinatentransformation. Der vom fahrzeugfesten Querbeschleunigungsmesser erfaßte Wert wird zu einem aus anderen Sensorsignalen berechneten Wert der erdbezogenen Querbeschleunigung in Bezug gesetzt. Erdbezogen soll heißen, daß die z-Achse des Koordinatensystems in Gravitationsrichtung verläuft, während die x- und die y-Achse senkrecht hierzu in Fahrzeuglängs- und -querrichtung weisen.

Die erdbezogene Querbeschleunigung des Fahrzeugs kann beispielsweise aus einer gemessenen oder berechneten Gierwinkelgeschwindigkeit und der Fahrzeuglängsgeschwindigkeit oder aus den einzelnen Radgeschwindigkeiten je eines rechten und eines linken Fahrzeugrades berechnet werden.

Falls gewünscht, kann auf einfache Weise noch ein Anteil des Querneigungswinkels als Wankwinkel ausgewiesen werden, indem die gemessene, fahrzeugbezogene Querbeschleunigung mit einem fahrzeugspezifischen, beladungsabhängigen Faktor multipliziert wird, der vorzugsweise einmalig vorab durch Versuchsmessungen ermittelt und in der fahrzeugeigenen Recheneinrichtung abgelegt wird.

Eine nähere Erläuterung des Erfindungsgedankens erfolgt nun unter Zuhilfenahme einer Zeichnung.

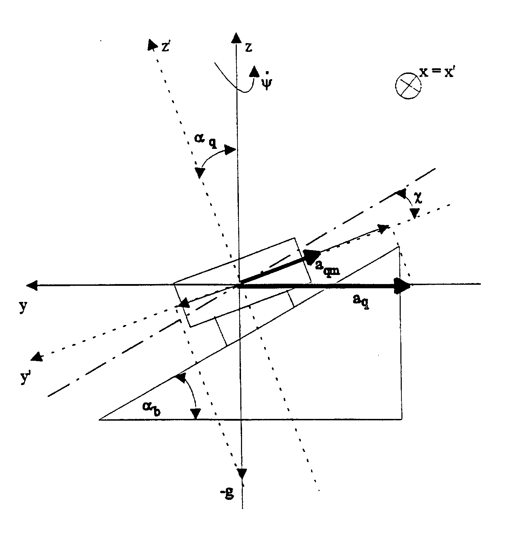

Die einzige Figur zeigt das Verhältnis des fahrzeugbezogenen Koordinatensystems (x',y',z') zum erdbezogenen Koordinatensystem (x,y,z), wobei in diesem Beispiel angenommen wird, daß das Fahrzeug keinen Längsneigungswinkel zur Horizontalen einnimmt (x = x'). Die Transformation läßt sich anhand der Figur durch folgende Gleichung darstellen.

$$a_{qm} = a_q \cos \alpha_q - g \sin \alpha_q \qquad (1)$$

Dabei sind die in der Figur verwendeten Variablen wie folgt definiert:

| | |
|---|---|
| $a_q$ | Querbeschleunigung bezüglich des ursprünglichen Koordinatensystems |
| $a_{qm}$ | gemessene Querbeschleunigung bezüglich des Fahrzeugkoordinatensystems; |
| $g$ | Erdbeschleunigung (Gravitation); |
| $\alpha_b$ | Fahrbahnquerneigungswinkel; |
| $\chi$ | Wankwinkel; |

$\alpha_q = \alpha_b + \chi$     Fahrzeugquerneigungswinkel bezüglich des ursprünglichen Koordinatensystems.

Aus (1) folgt:

$$a_{qm} = \sqrt{a_q^2 + g^2}\cos\left(\Upsilon - \alpha_q\right) \tag{2}$$

$$\Upsilon = 360° - \arccos \frac{a_q}{\sqrt{a_q^2 + g^2}}$$

wobei:           Nach (2)
und der Figur gilt:

$$\Upsilon - \alpha_q = 360° - \arccos \frac{a_{qm}}{\sqrt{a_q^2 + g^2}} \tag{3}$$

          Aus (2) und (3)
folgt:

$$\alpha_q = \arccos \frac{a_{qm}}{\sqrt{a_q^2 + g^2}} - \arccos \frac{a_q}{\sqrt{a_q^2 + g^2}} \tag{4}$$

Um den Rechenaufwand zu reduzieren bzw. in Integer zu programmieren, kann diese Berechnung entweder durch Approximierung nach der Taylor-Reihenentwicklung oder nach dem Newton-Iterationsverfahren durchgeführt werden.
Die Approximationen nach der Taylor-Reihenentwicklung

$$\sqrt{a_q^2 + g^2} \cong g + \frac{a_q^2}{2g} - \frac{a_q^4}{8g^3}$$

$$\arccos(x) \cong \frac{\Pi}{2} - x - \frac{x^3}{6}$$

lauten:Durch diese Approximationen ergibt sich dann die Gleichung:

$$\alpha_q = \left( x_q - x_{qm} + \frac{x_q^3 - x_{qm}^3}{6} \right) \frac{180°}{\Pi}$$

mit

$$x_{qm} = \frac{a_q}{\sqrt{a_q^2 + g^2}} \cong \frac{a_q}{g + \frac{a_q^2}{2g} - \frac{a_q^4}{8g^3}}$$

und

$$x_q = \frac{a_q}{\sqrt{a_q^2 + g^2}} \cong \frac{a_q}{g + \dfrac{a_q^2}{2g} - \dfrac{a_q^4}{8g^3}}$$

Das Newton-Iterationsverfahren ist bekannt und wird deshalb hier nicht weiter verfolgt.

Die Querbeschleunigung $a_q$ bezüglich des urprünglichen Koordinatensystems kann entweder durch

$$a_q \cong v_{fzg}(\dot{\Psi} + \dot{\beta}) \cong v_{fzg}\,\dot{\Psi}$$

oder durch eine der nachfolgenden Gleichungen

$$a_q = \frac{V_{hr}^2 - V_{hl}^2}{2S} \qquad a_q = \frac{V_{vr}^2 - V_{vl}^2}{2S}$$

$$a_q = \frac{V_{vr}^2 - V_{vl}^2}{2S} \qquad a_q = \frac{V_{hr}^2 - V_{hl}^2}{2S}$$

nachgebildet werden, wobei folgende Bezeichnungen verwendet wurden:

| | |
|---|---|
| $v_{fzq}$ | Fahrzeugreferenzgeschwindigkeit; |
| $\dot{\beta}$ | Schwimmwinkelgeschwindigkeit; |
| $\dot{\Psi}$ | Gierwinkelgeschwindigkeit; |
| $v_{vr}$ | Radgeschwindigkeit vorne rechts; |
| $v_{vl}$ | Radgeschwindigkeit vorne links; |
| $v_{hr}$ | Radgeschwindigkeit hinten rechts; |
| $v_{hl}$ | Radgeschwindigkeit hinten links; |
| S | Spurweite des Fahrzeuges. |

Im folgenden wird eine Möglichkeit zur Ermittlung des Wankwinkels angegeben. Wie in der Literatur beschrieben, z.B. in Mitschke, Dynamik der Kraftfahrzeuge, Band C, Springer-Verlag 1990, ist die Querbeschleunigung $a_q$ bezüglich des ursprünglichen Koordinatensystems von der Fahrzeuggeschwindigkeit und vom Krümmungsradius der Bahnkurve $\rho$ abhängig. Sie ist nach folgender Gleichung zu berechnen:

$$a_q = \frac{V_{fzg}^2}{\rho} \tag{4}$$

Der Wankwinkel ist proportional zur Querbeschleunigung, solange die Fahrzeugparameter konstant sind. Nach der Literatur ist der Wankwinkel beim leeren Fahrzeug 8°/g und beim beladenen Fahrzeug 11°/g nicht zu überschreiten. Bei $a_{qm}<0$ ergibt sich dann $\chi>0$, bei $a_{qm}>0$ $\chi<0$ und bei $a_{qm}=0$ $\chi=0$. Dadurch kann die eigene Wankbewegung beim leeren Fahrzeug durch

$$\chi_{max} \cong -a_{qm}k, \quad k = \frac{8°}{9,81\ \text{m/s}}$$

und beim beladenen Fahrzeug durch

$$\chi_{max} \cong -a_{qm}k, \quad k = \frac{11°}{9,81\ \text{m/s}}$$

abgeschätzt werden. Der Faktor k kann durch einen Fahrversuch auf einer ebenen Fahrbahn mit Hilfe eines besonderen Wankwinkel-Meßsystems fahrzeugspezifisch ermittelt werden, nämlich:

$$k \cong - \frac{\chi_m}{a_{qm}}$$

wobei $\chi_m$ der durch das Meßsystem gemessene Wankwinkel ist.

Die Querneigungserkennung wurde bei einem Fahrversuch in einer Test-Steilkurve ohne Einschalten des Giermomentenreglers zum Testen eingesetzt. Dabei wurde die Wurzel-Berechnung nach dem Newton-Iterationsverfahren durchgeführt, da die Wurzelfunktion bereits in der Integer-Programmierung vorhanden ist.

Aus den Meßergebnissen war zu erkennen , daß die Querbeschleunigung bezüglich des ursprünglichen Koordinatensystems nach Gleichung (4) von der Fahrzeuggeschwindigkeit abhängig ist. Die Wirkung der eigenen Wankbewegung war aus einem Vergleich der Meßergebnisse bei verschiedenen Fahrzeuggeschwindigkeiten festzustellen, da die Fahrbahnneigung bekannt und bei allen Durchläufen dieselbe war. Bei niedrigen Fahrzeuggeschwindigkeiten ist die Querbeschleunigung klein und verursacht eine kleine eigene Wankbewegung. Bei einer höheren Querbeschleunigung ist die Wankbewegung unübersehbar. Mit Hilfe des Wankwinkel-Meßsystems kann der Istwert des Querneigungswinkels ermittelt werden, der als Referenzwert für eine Untersuchung der Fahrversuchsergebnisse zur Verfügung steht. Bei Vergleich zwischen dem gemessenen und dem berechneten Querneigungswinkel hat sich ergeben, daß die Berechnung zumindest bei einer nahezu stationären Fahrt zufriedenstellende Ergebnisse liefert.

## Patentansprüche

1. Verfahren zur Bestimmung von das Fahrverhalten eines Fahrzeugs charakterisierenden Größen, wobei das Fahrzeug mit einem fahrzeugfesten Querbeschleunigungsmesser ($a_{qm}$) und pro Fahrzeugrad mit einem Radsensor zur Erfassung der Radgeschwindigkeit ($v_{vl}$, $v_{vr}$, $v_{hl}$, $v_{hr}$) sowie zumindest als einspuriges Fahrzeug mit einem Gierratensensor zur Erfassung der Gierwinkelgeschwindigkeit($\dot{\Psi}$) ausgestattet ist, **dadurch gekennzeichnet, daß** ein in Fahrzeugkoordinaten ($x',y',z'$) gemessener Wert der Querbeschleunigung ($a_{qm}$) des Fahrzeugs zu einem in Erdkoordinaten ($x,y,z$) berechneten Wert ($a_q$) der Querbeschleunigung in Bezug gesetzt wird und durch Auflösung der Gleichung

$$a_{qm} = a_q \cos \alpha_q - g \sin \alpha_q$$

die Querneigung ($\alpha_q$) des Fahrzeugs bezüglich der Erdkoordinaten ($x,y,z$) ermittelt wird, wobei mit g die Gravitation bezeichnet ist.

2. Verfahren nach Anspruch 1, **dadurch gekennzeichnet, daß** die Berechnung der erdbezogenen Querbeschleunigung ($a_q$) nach der Formel

$$a_q \cong V_{fzg} \dot{\Psi}$$

erfolgt, wobei $v_{fzg}$ die gemessene oder aus einzelnen Radgeschwindigkeiten ermittelte Fahrzeuggeschwindigkeit ist und $\dot{\Psi}$ die gemessene oder berechnete Gierwinkelgeschwindigkeit des Fahrzeugs.

3. Verfahren nach Anspruch 1, **dadurch gekennzeichnet, daß** die Berechnung der erdbezogenen Qurbeschleunigung ($a_q$) nach einer der Formel

$$a_q \cong v_{fzg}(\dot{\psi} + \dot{\beta})$$

erfolgt, wobei $v_{fzg}$ die gemessene oder aus einzelnen Radgeschwindigkeiten ermittelte Fahrzeuggeschwindigkeit ist, $\dot{\Psi}$ die gemessene oder berechnete Gierwinkelgeschwindigkeit des Fahrzeugs und $\dot{\beta}$ die gemessene oder berechnete Schwimmwinkelgeschwindigkeit des Fahrzeugs.

4. Verfahren nach Anspruch 1, wobei es sich um ein zweispuriges Fahrzeug handelt, **dadurch gekennzeichnet, daß** die Berechnung der erdbezogenen Qurbeschleunigung ($a_q$) nach einer der Formeln

$$a_q = \frac{v_{xr}^2 - v_{xl}^2}{2S}$$

erfolgt, wobei $v_{xr}$ die Radgeschwindigkeit eines rechten Fahrzeugrades, $v_{xl}$ die Radgeschwindigkeit eines linken Fahrzeugrades und S die Spurweite des Fahrzeugs bezeichnet.

5. Verfahren nach einem der vorhergehenden Ansprüche, **dadurch gekennzeichnet, daß** der Wankwinkel ($\chi$) des Fahrzeugs nach der Formel

$$\chi \cong - a_{qm} \, k$$

ermittelt wird, wobei k ein beladungsabhängiger, fahrzeugspezifisch ermittelter Faktor ist.

6. Verfahren nach Anspruch 5, **dadurch gekennzeichnet, daß** der Faktor k durch eine Messung von in Fahrzeugkoordinaten (x',y',z') gemessener Querbeschleunigung ($a_{qm}$) und gleichzeitiger Versuchsmessung des Wankwinkels ($\chi_m$) einmalig nach der Formel

$$k \cong - \frac{\chi_m}{a_{qm}}$$

ermittelt und in einer Recheneinrichtung im Fahrzeug abgelegt ist.

**Claims**

1. Method of determining quantities **characterizing** the driving behavior of a vehicle, wherein the vehicle includes a transverse accelerometer ($a_{qm}$) fixed to the vehicle, a wheel sensor on each vehicle wheel for measuring the wheel speed ($v_{vl}$, $v_{vr}$, $v_{hl}$, $v_{hr}$), and a yaw rate sensor for measuring the yaw velocity ($\dot{\Psi}$) at least as a one-track vehicle, **characterized in that** a value of the transverse acceleration ($a_{qm}$) of the vehicle measured in vehicle coordinates (x', y', z') is related to a value ($a_q$) of the transverse acceleration which is calculated in ground-related coordinates (x, y, z), and the transversal inclination ($\alpha_q$) of the vehicle in relation to the ground-related coordinates (x, y, z) is determined by solution of the equation

$$a_{qm} = a_q \cos \alpha_q - g \sin \alpha_q$$

and g designating the gravitation.

2. Method as claimed in claim 1,
**characterized in that** the ground-related transverse acceleration ($a_q$) is calculated pursuant the equation

$$a_q \cong v_{fzg} \, \dot{\Psi}$$

and $v_{fzg}$ designates the vehicle speed measured or determined from individual wheel speeds, and $\Psi$ denotes the measured or calculated yaw velocity of the vehicle.

3. Method as claimed in claim 1,
**characterized in that** the ground-related transverse acceleration ($a_q$) is calculated pursuant the equation

$$a_q \cong v_{fzg} (\dot{\Psi} + \dot{\beta})$$

and $V_{fzg}$ designates the vehicle speed measured or determined from individual wheel speeds, $\dot{\Psi}$ denotes the measured or calculated yaw velocity of the vehicle, and $\dot{\beta}$ denotes the measured or calculated sideslip angle speed of the vehicle.

4. Method as claimed in claim 1, wherein the vehicle is a two-track vehicle, **characterized in that** the ground-related transverse acceleration ($a_q$) is calculated pursuant any one of the equations

$$a_q = \frac{V_{xr}^2 - V_{xl}^2}{2S}$$

wherein $v_{xr}$ is the wheel speed of a right vehicle wheel, $v_{xl}$ is the wheel speed of a left vehicle wheel, and S is the tire tread width of the vehicle.

5. Method as claimed in any one of the preceding claims, **characterized in that** the roll angle ($\chi$) of the vehicle is determined pursuant the equation

$$\chi \cong - a_{qm}\ k$$

wherein k is a load-responsive factor defined specifically for a vehicle.

6. Method as claimed in claim 5, **characterized in that** the factor k is determined by a measurement of the transverse acceleration ($a_{qm}$) measured in vehicle coordinates (x', y', z') and a simultaneous one-time test measurement of the roll angle ($\chi_m$) pursuant the equation

$$k \cong - \frac{\chi_m}{a_{qm}}$$

and is stored in a calculating device in the vehicle.

## Revendications

1. Procédé de détermination de grandeurs caractérisant le comportement de déplacement d'un véhicule, le véhicule étant pourvu d'un dispositif de mesure d'accélération transversale ($a_{qm}$) fixe par rapport au véhicule et, par roue de véhicule, d'un détecteur de roue servant à détecter la vitesse de roue ($v_{vl}$, $v_{vr}$, $v_{hl}$, $v_{hr}$), ainsi qu'au moins en tant que véhicule à voie unique, d'un détecteur de vitesse de lacet servant à détecter la vitesse angulaire de lacet ($\dot{\Psi}$), **caractérisé en ce qu'**une valeur de l'accélération transversale ($a_{qm}$) du véhicule qui est mesurée dans des coordonnées de véhicule (x', y', z') est liée par une relation avec une valeur ($a_q$) de l'accélération transversale qui est calculée dans des coordonnées terrestres (x, y, z) et, au moyen d'une résolution de l'équation

$$a_{qm} = a_q \cos \alpha_q - g \sin \alpha_q$$

l'inclinaison transversale ($\alpha_q$) du véhicule par rapport aux coordonnées terrestres (x, y, z) étant déterminée, l'accélération de la pesanteur étant désignée par g.

2. Procédé suivant la revendication 1, **caractérisé en ce que** le calcul de l'accélération transversale rapportée à la terre ($a_q$) s'effectue conformément à la formule

$$a_q \cong V_{fzg}\ \dot{\Psi}$$

$v_{fzg}$ étant la vitesse de véhicule mesurée ou déterminée à partir de vitesses de roue individuelles et $\dot{\Psi}$ la vitesse angulaire de lacet du véhicule mesurée ou calculée.

3.  Procédé suivant la revendication 1, **caractérisé en ce que** le calcul de l'accélération transversale rapportée à la terre ($a_q$) s'effectue conformément à l'une des formules

$$a_q \cong v_{fzg}(\dot{\Psi} + \dot{\beta})$$

$v_{fzg}$ étant la vitesse de véhicule mesurée ou déterminée à partir de vitesses de roue individuelles, $\dot{\Psi}$ la vitesse angulaire de lacet du véhicule mesurée ou calculée et $\dot{\beta}$ la vitesse angulaire d'attitude du véhicule mesurée ou calculée.

4.  Procédé suivant la revendication 1, dans le cas où il s'agit d'un véhicule à double voie, **caractérisé en ce que** le calcul de l'accélération transversale rapportée à la terre ($a_q$) s'effectue conformément à l'une des formules

$$a_q = \frac{V_{xr}^2 - V_{xl}^2}{2S}$$

$v_{xr}$ désignant la vitesse d'une roue droite de véhicule, $v_{xl}$ la vitesse d'une roue gauche de véhicule et S la voie du véhicule.

5.  Procédé suivant l'une des revendications précédentes, **caractérisé en ce que** l'angle de roulis ($\chi$) du véhicule est déterminé conformément à la formule

$$\chi \cong - a_{qm} \, k$$

k étant un facteur déterminé propre au véhicule et dépendant de la charge.

6.  Procédé suivant la revendication 5, **caractérisé en ce que** le facteur k est déterminé une seule fois, au moyen d'une mesure de l'accélération transversale ($a_{qm}$) mesurée dans les coordonnées de véhicule (x', y', z) et d'une mesure d'essai simultanée de l'angle de roulis ($\chi_m$), conformément à la formule

$$k \cong - \frac{\chi_m}{a_{qm}}$$

et est déposé dans un dispositif de calcul situé dans le véhicule.